# EUROPÄISCHE PATENTANMELDUNG

(11) **EP 1 962 003 A1**
(43) Veröffentlichungstag der Anmeldung: **27.08.2008**
(21) Anmeldenummer: 07103048.0
(22) Anmeldetag: 26.02.2007
(51) Int. Cl.: F16K 17/38, F23D 14/82

(54) **Rückschlagsicherung für einen Strahlungsbrenner**

(71) Anmelder: GoGaS Goch GmbH & Co. KG, 44265 Dortmund (DE)
(72) Erfinder: Krieger, Reinhold, 40227, Düsseldorf (DE); Quilitz, Karl-Heinz, 58089, Hagen (DE)
(74) Vertreter: Schmidt, Frank-Michael

(57) **Zusammenfassung**

Die Erfindung betrifft eine Sicherungsvorrichtung für Strahlungsbrenner, wobei der Strahlungsbrenner einen Gaseinlass (1), ein Brennergehäuse (3) und ein vom Gaseinlass (1) zum Brennergehäuse führendes Rohr (2) aufweist. Eine Betätigungsstange (10) mit Verschlussmitteln (12) kann den Gaseinlass (1) in einer Verschlussstellung der Betätigungsstange verschließen. Ein am Strahlungsbrenner (3) festlegbares Stützelement (14) ist vorgesehen und die Betätigungsstange (10) ist mit Rückstellmitteln (11) gegen das Stützelement (14) verspannt und wird in die Verschlussstellung gedrängt. Mit der Betätigungsstange (10) ist eine Aufnahme (13) gekoppelt, in der eine Fluid-befüllte Ampulle (15) angeordnet ist. Die Fluid-befüllte Ampulle sperrt die Bewegung der vorgespannten Betätigungsstange in die Verschlussstellung. Die Fluid-befüllte Ampulle ist derart ausgebildet und befüllt, dass sie bei Erwärmung über eine vorgegebene Auslösetemperatur durch den Fluid-Innendruck zerstört wird und damit die Bewegung der Betätigungsstange in die Verschlussstellung freigibt.

## Beschreibung

Die Erfindung betrifft eine Sicherungsvorrichtung für einen Strahlungsbrenner. Insbesondere betrifft die Erfindung eine Sicherungsvorrichtung, welche für einen Strahlungs- bzw. Gasbrenner mit einem Gaseinlass, einem Brennergehäuse und einem vom Gaseinlass zum Brennergehäuse führenden Rohr vorgesehen ist, wobei die Sicherungsvorrichtung eine Betätigungsstange mit Verschlussmitteln aufweist, welche den Gaseinlass in einer Verschlussstellung der Betätigungsstange absperrt und Rückstellmitteln, welche die Betätigungsstange in die Verschlussstellung drängen.

Aus dem europäischen Patent EP 0 429 359 B1 ist ein Strahlungsbrenner mit einer Sicherungsvorrichtung bekannt. Die bekannte Sicherungsvorrichtung weist einen Rahmen auf, in dem eine Betätigungsstange mit einem endseitig angebrachten Verschlusselement durch eine Schraubenfeder vorgespannt ist. Die Schraubenfeder drängt die Betätigungsstange und das Verschlusselement in eine Verschlussstellung, in der das Verschlusselement einen Gaseinlass des Brenners verschließt. Die Betätigungsstange wird an einer tatsächlichen Bewegung in die Verschlussstellung jedoch gehindert, da die Betätigungsstange an ihrem dem Verschlussmittel gegenüberliegenden Ende der Betätigungsstange am Rahmen festgelegt ist. Dort ist die Betätigungsstange nämlich durch eine Schweißstelle oder Hartlot am Rahmen befestigt. Dieser Lotpunkt oder Schweißpunkt ragt in das Brennergehäuse hinein und wird bei einem stattfindenden Rückschlag der Gasverbrennung in übermäßig erwärmt und das Lot wird angeschmolzen. Die Kraft der Schraubenfeder bewirkt dann, wenn das Lot durch die Wärmeeinwirkung weich geworden ist und seine Haltekraft verliert, die Bewegung der Betätigungsstange in die Verschlussstellung und den Verschluss des Gaseinlasses.

Bei der bekannten Vorrichtung ist es jedoch nachteilig, dass für eine erneute Vorspannung bzw. ein Scharfmachen der Vorrichtung die Betätigungsstange wieder vorgespannt und festgelötet oder geschweißt werden muss. Ferner ist die Befestigung mit Löten oder Schweißen nicht in geeigneter Weise zu Kalibrieren. Ein erneutes Spannen der Vorrichtung und damit ein Ermöglichen des Betriebs des Brenners, z.B. nach dessen Reparatur oder Austausch fehlerhafter Teile, ist aufwendig und die nachfolgende Erneuung der Lötstelle oder Schweißstelle nicht entsprechend reproduzierbar.

Der Erfindung liegt daher die Aufgabe zugrunde, eine Sicherungsvorrichtung für Strahlungsbrenner bereitzustellen, welche einfach und effizient zu Warten ist und dennoch ein reproduzierbares und kalibriertes Auslöseverhalten gewährleistet und damit die Sicherheit des Strahlungsbrenners verbessert.

Diese Aufgabe wird erfindungsgemäß gelöst durch eine Sicherungsvorrichtung gemäß dem Patentanspruch 1.

Die erfindungsgemäße Sicherungsvorrichtung ist geeignet für Strahlungsbrenner oder Gasbrenner, welche einen Gaseinlass, ein Brennergehäuse und ein von Gaseinlass zum Brennergehäuse führendes Rohr aufweisen. Die Sicherungsvorrichtung weist eine Betätigungsstange auf, an welcher Verschlussmittel angeordnet sind. Die Verschlussmittel bedecken, verschließen oder verstopfen den Gaseinlass, wenn die Betätigungsstange sich in einer Verschlussstellung befindet. Wird der Gaseinlass verschlossen, so ist der Gasdurchfluss derart verringert, dass die Brennerflamme erlischt. Dies Verhindert nämlich eine durch die durch den Flammenrückschlag verursachten Schäden und ein mögliches Lösen und Herabfallen von auf diese Weise zerstörten Brennerteilen.

Die Verschlussmittel können beliebig ausgebildet sein, z.B. können sie teilweise in den Gaseinlass hineinragen oder diesen mit einer entsprechend ausgebildeten Platte oder einem Stopfen bedecken.

Die Sicherungsvorrichtung weist ferner ein Stützelement auf, welches am Gasbrenner festlegbar ist. Das Stützelement kann z.B. im Brennergehäuse, im zum Brennergehäuse führenden Rohr oder an einer anderen Stelle des Gasbrenners befestigt werden.

Es sind außerdem Rückstellmittel vorgesehen, welche die Betätigungsstange gegen das Stützelement verspannen und die Betätigungsstange in die Verschlussstellung drängen bzw. in diese Richtung vorspannen, in der die Verschlussmittel den Gaseinlass verschließen. Die Rückstellmittel können beliebige Spannmittel oder elastische Mittel, z.B. aus Metall oder Kunststoffen sein.

Mit der Betätigungsstange ist eine Aufnahme gekoppelt. Die Aufnahme nimmt eine Fluid-befüllte Ampulle auf, so dass die Ampulle zwischen der Aufnahme und den Stützmitteln eingebracht ist. Die Rückstellmittel, welche die Betätigungsstange in die Verschlussstellung drängen, werden an ihrer Bewegung in die Verschlussstellung gehindert, weil die Betätigungsstange mit der Aufnahme gekoppelt ist und die Fluid-befüllte Ampulle die Bewegung der Betätigungsstange in Richtung der Verschlussstellung verhindert. Die Rückstellmittel wirken also auf die Betätigungsstange ein, die wiederum mit der Aufnahme gekoppelt ist, und die Ampulle hindert die Betätigungsstange entgegen der Einwirkung der Rückstellmittel an der Bewegung in die Verschlussstellung, da sie zwischen Stützmitteln und Aufnahme durch Einwirkung der Rückstellmittel eingespannt ist.

Auf diese Weise wird die Betätigungsstange in einer vorgespannte Freigabe-Stellung gehalten, in der die Verschlussmittel den Gaseinlass freihalten, so dass genügend Gas zum Betrieb des Strahlungsbrenners bzw. Gasbrenners ausströmen kann. Die Fluid-befüllte Ampulle ist derart ausgebildet, dass sie bei Erwärmung über einen vorgegebene Auslösetemperatur durch den bei dieser Auslösetemperatur herrschenden Fluid-Innendruck zerstört wird.

Erfindungsgemäß wird demnach eine Fluid-befüllte Ampulle als Auslöseelement für die Sicherungsvorrichtung verwendet. Zu diesem Zweck verwendbare Ampullen sind genau kalibrierbar und durch einfachen Austausch der Ampulle ist die Sicherungsvorrichtung wieder einsatzfähig. Ferner kann die Sicherungsvorrichtung nachträglich durch Auswahl einer abweichend vorbefüllten Ampulle auf eine andere Auslösetemperatur eingestellt werden. Die Ampulle ist durch wenige Handgriffe auszutauschen und es bedarf keines Schweiß- oder Lötvorgangs, um die Sicherungsvorrichtung wieder betriebsfähig zu machen. Ferner kann die Auslösetemperatur des Strahlungsbrenners wesentlich präziser vorgegeben werden.

Ein weiterer Vorteil besteht darin, dass die Verwendung der Ampullen einer unsachgemäßen oder laienhaften Reparatur des Sicherungselements vorbeugt, wie sie durch eine Löt- oder Schweißverbindung begünstigt wird.

Verwendbare Ampullen sind beispielsweise in der Patentschrift DE 197 80 041 offenbart. Das Fluid ist dort eine Sprengflüssigkeit, welche physikalische Eigenschaften aufweist, die eine derartige Verwendung begünstigen. Für eine mögliche Fluid-Auswahl wird beispielhaft auf diese Druckschrift verwiesen.

Das Fluid ist von einer Hülle aus einem spröden Material umgeben, welches bei Überschreiten der Auslösetemperatur durch eine Sprengung in kleine Fragmente zerspringt. Dadurch wird ein Blockieren der Sicherungsvorrichtung durch Stehenbleiben von Splittern weitgehend ausgeschlossen.

Gemäß der Erfindung werden die Vorteile eines derartigen kalibrierten Auslöseelements verwendet, um einen Strahlungsbrenner abzusichern. Derartige Ampullen sind als Auslöseelemente für Sprinkleranlagen einsetzbar und sind mit zahlreichen kalibrierten Auslösetemperaturen verfügbar. Während bei bekannten Löschanlagen ein Auslöseelement verwendet wird, um ein Löschmittel im Falle eines Brandes freizugeben, sieht die Erfindung vor, dass ein Auslöselement unmittelbar in die Brenneinrichtung integriert wird, um die Brennstoffzufuhr abzustellen, sofern die gewünschten Betriebsbedingungen nicht eingehalten werden.

Im Rahmen der Erfindung sind jedoch auch andere Ausbildungen von Ampullen möglich. Wesentlich ist, dass die Fluid-Füllung der Ampulle diese bei Überschreiten einer vorgegebenen Temperatur bersten lässt.

Vorzugsweise sind die Rückstellmittel, welche die Betätigungsstange vorspannen, als Schraubenfeder ausgebildet, welche auf die Betätigungsstange aufgeschoben ist.

Die Schraubenfeder ist durch die hindurch geführte Betätigungsstange mechanisch gesichert und stützt sich auf einer Seite am Stützelement ab und verspannt über eine Anlage, welche an der Betätigungsstange ausgebildet oder befestigt ist, diese gegen das Stützelement. Die Anlage kann z.B. eine Verdickung in der Betätigungsstange sein (ähnlich der Verdickung in einer Kugelschreibermine), es kann jedoch eine beliebige andere Anlage an der Betätigungsstange ausgebildet sein.

Vorzugsweise erstrecken sich die Verschlussmittel in radialer Richtung von der Betätigungsstange.

An der Betätigungsstange ist ein Teller oder eine sonstige Verdickung (z.B. Kugel oder Ellipsoid) angeformt oder aufgesetzt. Befindet sich die Betätigungsstange in der Freigabe-Stellung, so sind die Verschlussmittel beabstandet von dem Gaseinlass angeordnet, üblicherweise in axialer Verlängerung der Betätigungsstange. Wird die Sicherungsvorrichtung freigegeben und bewegt sich die Betätigungsstange in die Verschlussstellung, werden die Verschlussmittel auf den Gaseinlass hinbewegt und kommen an diesem zur Anlage oder dringen in diesen teilweise ein. Dabei kann die Betätigungsstange ebenfalls abschnittsweise in den Gaseinlass eintauchen.

Die Betätigungsstange kann auch schon bereits in der Freigabestellung, also vor der Auslösung der Sicherungsvorrichtung, mit einem Ansatz oder einem Abschnitt in den Gaseinlass eintauchen, so dass sie in der Freigabe-Stellung einen Teil des Querschnitts des Gaseinlasses belegt. Die Blockade des Gaseinlasses in der Freigabe-Stellung ist aber jedenfalls so gewählt, dass der vorgesehene Betrieb des Strahlungsbrenners in der Freigabe-Stellung ohne Einschränkung möglich ist, wohingegen die Verschlussmittel den Gaseinlass in der Verschlussstellung in erheblich höherem Maße verschließen.

In einer bevorzugten Ausführungsform sind die Verschlussmittel als Scheibe oder Teller ausgebildet und die Betätigungsstange durchtritt die Verschlussmittel zentral.

Die Betätigungsstange erstreckt sich in diesem Fall beidseitig von dem Verschlussmitteln, so dass die Verschlussmittel z.B. auf die Betätigungsstange aufgeschoben sein können.

In einer weiteren Ausführungsform sind die Verschlussmittel integral mit der Betätigungsstange ausgebildet. Die Verschlussmittel sind beispielsweise als Verdickung oder Abplättung ausgebildet.

In einer besonders vorteilhaften Ausbildung der Erfindung bilden die Verschlussmittel eine Anlage für die Rückstellmittel.

Die Rückstellmittel sind dann zwischen den Verschlussmitteln einerseits und den Stutzmitteln andererseits eingespannt und üben durch die Kraftübertragung auf die Verschlussmittel, die wiederum mit der Betätigungsstange verbunden sind, eine Kraft auf die Betätigungsstange auf und drängen diese in die Verschlussstellung. Die Verschlussmittel erfüllen entsprechend eine Doppelfunktion, nämlich einerseits als Anlage für die Rückstellmittel und andererseits als Verschlussmittel für den Gaseinlass.

In einer bevorzugten Ausführungsform sind die Stützmittel als Rahmen ausgebildet, der mehrere Querstreben aufweist. Die Betätigungsstange ist in wenigstens zwei der Querstreben geführt.

Durch die Führung in den Querstreben ist gewährleistet, dass die Betätigungsstange und die Verschlussmittel nach einem Auslösen der Sicherungsvorrichtung tatsächlich den Gaseinlass treffen und diesen verschließen.

Weitere vorteilhafte Ausführungsformen sind in den Unteransprüchen ausgeführt.

Die Erfindung wird nun anhand von Ausführungsbeispielen, welche in den beiliegenden Zeichnungen dargestellt sind, näher beschrieben. Die Zeichnungen zeigen:
In Figur 1A ein Ausführungsbeispiel einer montierten erfindungsgemäßen Sicherungsvorrichtung, welche noch nicht ausgelöst wurde und sich in der Freigabestellung befindet.
Figur 1B zeigt die montierte Sicherungsvorrichtung aus Figur 1, wobei die Sicherungsvorrichtung ausgelöst wurde und sich in der Sperrstellung befindet.
Figur 2 zeigt eine Aufsicht auf die Verschlussmittel, wie sie in den Sicherungsvorrichtungen gemäß Figur 1A und 1B verwendet sind.
Figur 3 zeigt eine Aufsicht auf die Stützmittel, wie sie in der Sicherungsvorrichtung gemäß Figur 1A und 1B verwendet sind.
Figur 4 zeigt eine alternative Ausbildung einer erfindungsgemäßen Sicherungsvorrichtung, wobei die Sicherungsvorrichtung ausgelöst wurde und sich in der Sperrstellung befindet.

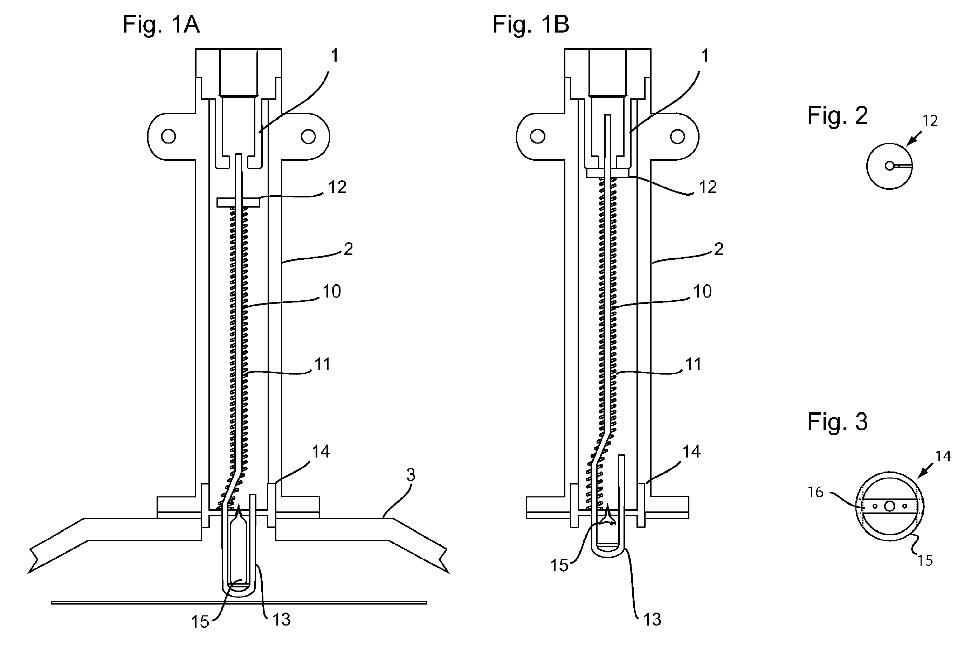

In Figur 1A ist eine Sicherungsvorrichtung gemäß einer ersten Ausführungsform der Erfindung gezeigt. Ein Gaseinlass 1 ist an einem Ende eines Rohres 2 angeordnet. Das Rohr 2 führt das aus dem Gaseinlass 1 austretende Gas durch eine Öffnung in ein Brennergehäuse 3. Das Rohr 2 weist üblicherweise noch eine Luftzuführung auf, die hier aus Gründen der Übersichtlichkeit jedoch nicht dargestellt ist.

In dem Rohr 2 ist die erfindungsgemäße Sicherungsvorrichtung, bestehend aus Betätigungsstange 10, Schraubenfeder 11, Verschlussplatte 12, Aufnahme 13, Stützmitteln 14 und Ampulle 15, angeordnet. Die Stützmittel 14 sind in einer Ausnehmung an einem, dem Brennergehäuse zugewandten Ende des Rohres 2 angeordnet. Die Betätigungsstange 10 ragt mit einem kurzen Abschnitt in die Öffnung des Gaseinlasses 1 hinein. Auf diese Weise ist gewährleistet, dass die Betätigungsstange beim Auslösen der Sicherungsvorrichtung in dem Gaseinlass geführt ist und die Verschlussmittel 12 den Gaseinlass 1 tatsächlich verschießen und es nicht zu einem Verkanten der Sicherungsvorrichtung kommen kann.

Die Schraubenfeder 11 ist auf die Betätigungsstange aufgeschoben und zwischen der Verschlussplatte 12 und den Stützmitteln 14 verspannt. Die Ampulle 15 ist durch unmittelbare Einwirkung der Kraft der Schraubenfeder 11 auf die Verschlussplatte 12 und damit Einwirkung auf die Betätigungsstange 10 gegen die Stützmittel 14 verspannt und wird durch die Aufnahme 13 in ihrer Lage gehalten. Die Ausbildung der Aufnahme 13 mit U-förmigem Querschnitt sichert die Ampulle gegen seitliches Verrutschen. Ein spitzes Verschlussende der Ampulle ist in eine entsprechende Ausnehmung in den Stützmitteln 14 eingeführt und die Ampulle ist daher zwischen Stützmitteln 14 und der Aufnahme 13 stabil und sicher gehalten.

In der in Figur 1A gezeigten Stellung ist die Sicherungsvorrichtung gespannt, eine Bewegung der Betätigungsstange und der an der Betätigungsstange befestigten Verschlussplatte zum Verschließen des Gaseinlasses 1 ist nicht möglich, da die Ampulle 15 die entsprechende Bewegung der mit der Betätigungsstange gekoppelter Aufnahme 13 und damit der Betätigungsstange blockiert.

Es ist an dieser Stelle festzuhalten, dass die Aufnahme zwar integral mit der Betätigungsstange ausgebildet sein kann, wie in Fig. 1A gezeigt, es ist jedoch auch eine beliebige andere Kopplung, z.B. durch Anlenkung, Hebelwirkung oder Befestigung möglich.

Steigt die Temperatur aufgrund eines Flammenrückschlags in dem Brennergehäuse in der Nähe der Ampulle 15 derart an, dass eine Auslösetemperatur überschritten wird, erhöht die in der Ampulle 15 befindliche Flüssigkeit bzw. das Fluid den Innendruck der Ampulle derart, dass die Ampulle gesprengt wird. Die Blockade der Bewegung der Betätigungsstange 10 wird aufgehoben und die Vorrichtung bewegt sich in die in Figur 1B gezeigte Stellung.

Wie in Figur 1B zu sehen ist, ragt die Betätigungsstange nun mit dem gesamten Abschnitt in den Gaseinlass hinein, der sich auf der dem Gaseinlass zugewandten Seite der Verschlussmittel 12 erstreckt. Die Verschlussmittel befinden sich in Anlage zu dem Gaseinlass und verschließen diesen. Bei der Bewegung aus der Stellung in Figur 1A in die Stellung in Figur 1B wird die Betätigungsstange 10 in dem Gaseinlass geführt und daher wird gewährleistet, dass die Verschlussmittel 12 in der gewünschten Orientierung und Stellung in Anlage an den Gaseinlass gelangen.

Wie erkennbar ist, kann die Sicherungsvorrichtung in einfacher Weise durch ein erneutes Spannen und Einbringen einer neuen Ampulle wieder betriebsfähig gemacht werden.

In Figur 2 ist die in den Figuren 1A und 1B gezeigte Verschlussplatte 12, welche die Verschlussmittel bildet, gezeigt. Sie besteht aus einer geschlitzten Kreisscheibe, welche auf die Betätigungsstange aufgeschoben und an dieser festgelegt wird, z.B. durch eine entsprechende Nut oder eine Klemmung oder Quetschung.

Figur 3 zeigt die Stützmittel 14 in einer Aufsicht. Diese sind aus einem zylindrischen Ring 15 mit einem Quersteg 16 gebildet. Der Quersteg weist eine zentrale Öffnung auf, in die ein Lager für die Spitze der Fluid-befüllten Ampulle bildet.

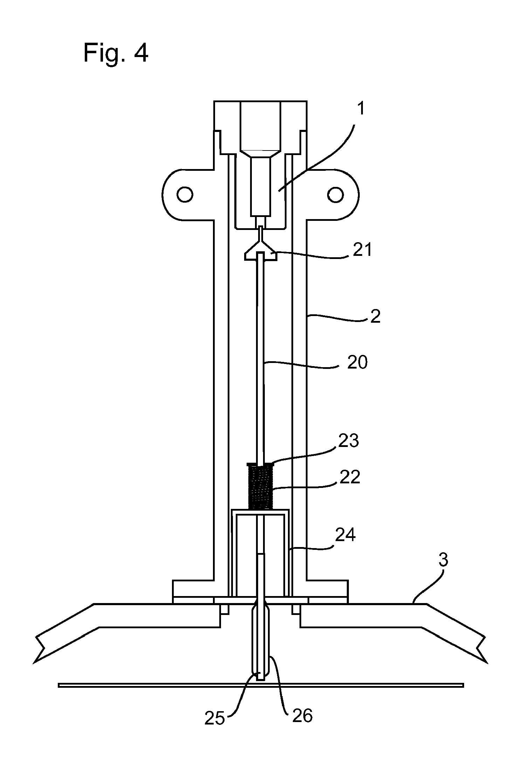

Figur 4 zeigt eine weitere Ausführungsform der Erfindung. Wiederum ist ein Gaseinlass an einem Rohr 2 angeordnet, welches das Gas zu dem Brennergehäuse 3 führt. An der Betätigungsstange 20 ist endseitig ein Verschlussmittel 21 angeordnet, welches auf die Betätigungsstange aufgesteckt ist. Das Verschlussmittel weist ein sich verjüngendes Ende und einen trichterförmigen Ansatz auf, wobei das Verschlussmittel in der gezeigten Freigabe-Stellung abschnittsweise in den Gaseinlass eintaucht. An der Betätigungsstange ist ferner eine Anlage 23 ausgebildet, an welcher sich die Feder 22 abstützt. Bei dieser Ausbildung sind demnach die Anlage für die Stützmittel und die Verschlussmittel getrennt ausgebildet.

Auf der anderen Seite der Feder sind die Stützmittel 24 ausgebildet, die aus einem Rahmen mit einer Basisplatte gebildet sind. Am unteren Ende der Betätigungsstange ist eine Aufnahmeschlaufe 25 ausgebildet, in der eine Ampulle 26 gehalten ist.

Im Rahmen der Erfindung sind zahlreiche Weiterbildungen möglich. Insbesondere ist es nicht unbedingt erforderlich, dass ein Abschnitt der Betätigungsstange oder der Verschlussmittel bereits in der Freigabe-Stellung in dem Gaseinlass eintaucht. Dies gewährleistet lediglich eine sichere Führung bei Auslösung. Ebenfalls möglich ist es, die Stützmittel als sich in das Rohr erstreckenden Rahmen auszubilden, wobei dann die Betätigungsstange in Querstreben der Stützmittel geführt sein kann, was eine ordnungsgemäße Auslösung und Bewegung der Verschlussmittel zum Gaseinlass sicherstellt.

Ebenfalls möglich ist die Verwendung von Temperaturauslösern, welche aus einem Flüssigkeits-gefüllten Auslösekörper bestehen, an den sich eine Druckleitung anschließt. Erhöht sich die Temperatur in dem Körper, so erhöht sich der Innendruck der Druckleitung und ein am Ende der Leitung angeordnetes mechanisches Element wird abschnittsweise aus dem System herausgeschoben. Ein solches Element kann dann zur Auslösung eines Sicherungsmechanismus verwendet werden. Da die Betätigung bei Erhöhung der Temperatur jedoch kontinuierlich verläuft (je höher die Temperatur steigt, desto mehr schiebt sich das Betätigungselement aus der Druckleitung hervor), ist es erforderlich, einen zusätzlichen Schaltmechanismus vorzusehen, welcher bei Überschreiten einer gewissen Schaltstellung durch das heraus geschobene Element ausgelöst wird. Dazu kann beispielsweise eine Raste oder ähnliches verwendet werden, welche bei einer bestimmten Stellung des heraus geschobenen Elementes die sprunghafte Auslösung des Sicherungselementes freigibt.

## Patentansprüche

1. Sicherungsvorrichtung für einen Strahlungsbrenner, welcher einen Gaseinlass (1), ein Brennergehäuse (3) und ein vom Gaseinlass (1) zum Brennergehäuse führendes Rohr (2) aufweist,
wobei die Sicherungsvorrichtung aufweist:
eine Betätigungsstange (10), an der Verschlussmittel (12) angeordnet sind, die den Gaseinlass (1) in einer Verschlussstellung der Betätigungsstange (10) verschließen,
ein am Strahlungsbrenner (3) festlegbares Stützelement (14),
Rückstellmittel (11), welche die Betätigungsstange (10) gegen das Stützelement (14) verspannen und in die Verschlussstellung drängen,
eine mit der Betätigungsstange (10) gekoppelte Aufnahme (13),
eine Fluid-befüllte Ampulle (15), welche in der Aufnahme (13) angeordnet ist und die Aufnahme entgegen der Rückstellkraft der Rückstellmittel (11) derart gegen die Stützmittel (14) abstützt, dass die Betätigungsstange (10) in einer vorgespannten Freigabe-Stellung gehalten ist, wobei die Fluid-befüllte Ampulle (15) derart ausgebildet ist, dass sie bei Erwärmung über eine vorgegebene Auslösetemperatur durch den Fluid-Innendruck zerstört wird.

2. Sicherungsvorrichtung nach Anspruch 1, **dadurch gekennzeichnet, dass** die Rückstellmittel (11) als Schraubenfeder ausgebildet sind, welche auf die Betätigungsstange (10) aufgeschoben ist.

3. Sicherungsvorrichtung nach Anspruch 1 oder 2, **dadurch gekennzeichnet, dass** die Verschlussmittel (12) sich in radialer Richtung von der Betätigungsstange (10) erstrecken.

4. Sicherungsvorrichtung nach Anspruch 3, **dadurch gekennzeichnet, dass** die Verschlussmittel (12) als Scheibe oder Teller ausgebildet sind, wobei die Betätigungsstange (10) die Verschlussmittel zentral durchtritt.

5. Sicherungsvorrichtung nach Anspruch 3, **dadurch gekennzeichnet, dass** die Verschlussmittel integral mit der Betätigungsstange ausgebildet sind.

6. Sicherungsvorrichtung nach einem der Ansprüche 1 bis 5, **dadurch gekennzeichnet, dass** die Verschlussmittel eine Anlage für die Rückstellmittel bilden.

7. Sicherungsvorrichtung nach einem der Ansprüche 1 bis 6, **dadurch gekennzeichnet, dass** die Ampulle aus beidseitig verschlossenen Glaskörper gebildet ist.

8. Sicherungsvorrichtung nach einem der Ansprüche 1 bis 7, **dadurch gekennzeichnet, dass** Betätigungsstange sich an Ihrem dem Gaseinlass zugewandten Ende verjüngt.

9. Sicherungsvorrichtung nach einem der Ansprüche 1 bis 8, **dadurch gekennzeichnet, dass** die Stützmittel als Rahmen mit mehreren Querstreben ausgebildet sind, wobei die Betätigungsstange in wenigstens zwei Querstreben geführt ist.

10. Sicherungsvorrichtung nach Anspruch 9, **dadurch gekennzeichnet, dass** Verschlussmittel endseitig am dem Gaseinlass zugewandten Ende der Betätigungsstange angeordnet sind.

11. Strahlungsbrenner mit einer Sicherungsvorrichtung gemäß einem der Ansprüche 1 bis 10, wobei die Sicherungsvorrichtung derart angeordnet ist, dass die Betätigungsstange sich axial in dem vom Gaseinlass zum Brennergehäuse führenden Rohr erstreckt und die Aufnahme mit der Fluid-befüllten Ampulle in das Brennergehäuse zumindest teilweise hineinragt.
